# NEW EUROPEAN PATENT SPECIFICATION

(11) **EP 2 855 371 B2**
(45) Date of publication and mention of the opposition decision: **26.03.2025**
(45) Mention of the grant of the patent: 01.12.2021
(21) Application number: 13774470.2
(22) Date of filing: 21.05.2013
(51) Int. Cl.: C11D 3/37, C02F 5/10

(54) **A WATER SOFTENING COMPOSITION**
ZUSAMMENSETZUNG ZUR WASSERENTHÄRTUNG
COMPOSITION ADOUCISSANTE

(30) Priority: 30.05.2012 GB 201209604; 20.11.2012 GB 201220838
(43) Date of publication of application: 08.04.2015
(73) Proprietor: Reckitt Benckiser Calgon BV, 2132 WT Hoofddorp (NL)
(72) Inventor: D'AMICO, Fabio, I-VE 30034 Mira (IT); GARAU, Federica, I-VE 30034 Mira (IT); MARETTO, Stefano, I-VE 30034 Mira (IT)
(74) Representative: Cawdell, Karen Teresa
(86) International application number: PCT/GB2013/051314
(87) International publication number: WO 2013/178990

(56) References cited:
- EP-A1- 0 124 913
- EP-A1- 1 935 852
- US-A- 5 281 352
- US-A1- 2007 253 926
- US-A1- 2008 287 335
- US-A1- 2011 021 403
- US-A1- 2011 021 403
- US-A1- 2011 160 114

## Description

This invention relates to a method of removing and preventing the deposit of limescale and soap scum in a clothes washing machine.

It is well known that certain metal compounds, notably calcium compounds, when present in water, have a significant effect on the properties of the water. For example, "hard" water containing a significant loading of soluble calcium and magnesium compounds may require a large amount of soap or detergent in order to form a lather. Scale deposits can readily form from such water, for example on heating or pH change or evaporation. These can be incrustations, which are left on a surface that has come into contact with the hard water. Particular issues arise in ware washing machines, such as dish and clothes washing machines. In particular scale incrustations may be left on the surfaces of the machines as well as the items washed therein. In particular issues arise with incrustation of heating elements, which reduces their life span and efficiency. A further issue arises in that scale incrustation can be found on the surface of clothes washed in the clothes washing machines which are perceptible to the wearer as feeling harsh to the touch.

There have been many proposals for removal of metal ions from aqueous solutions. In the industrial context proposals have included filter beds and polymeric filters for capturing heavy metal ions from an aqueous solution flowing within a passageway. Examples are given in EP992238A and GB20869564A. In the domestic context chelating compositions can be added to an aqueous washing solution and these can capture metal ions, such as calcium ions. Examples of chelating compositions are given in EP892040A.

Document EP 1 935 852 describes a water softener composition comprising a) one or more polycarboxylic acid homopolymer(s) or salt(s) thereof in an amount of 1 to 90 wt.%, b) one or more low molecular polycarboxylic acid(s) or salt(s) thereof in an amount of 1 to 90 wt.%, and c) one or more copolymer(s) based on maleic acid or (meth)acrylic acid or salt(s) thereof in an amount of 0.1 to 25 wt.%, wherein the one or more comonomer(s) is/are selected from the group comprising i) hydrophobic monomers, ii) hydrophobic monomers with one or more hydrophilic groups, and iii) hydrophilic monomers with hydrophilic groups.

Typically in ware washing machines cleaning compositions are provided which are "built" which provide a water softening effect and an increase to the efficiency of the detergent used therein. However, such compositions are not effective for softening the water in the rinse cycle of ware washing machines since such compositions are pumped out of the machine along with the dirty water prior to the rinse cycle. Therefore, scale deposits may build up on the hard surfaces of the washing machine such as the heating element, as well as the fabric of the items being worked.

Moreover it has recently been found that the scale deposits do not simple comprise an inorganic based matrix but also typically include other "organic" elements of detergents and / or washing products. Typically these organic components comprise mainly fatty acid based soap type moieties. These agents are in themselves not hugely problematic since after all they are usually an element of the washing agent which is used. However, since they are organic they can present a source of nutrition of various microbial life forms. These can build up over time causing a disadvantageous washing and / or bad odours to develop.

It is an object of the present invention to obviate and / or mitigate one or more of the issues highlighted above.

There is provided a water softening composition comprising a combination of polymeric water softening agents; the first agent comprising a polymer of an unsaturated carboxylic acid and the second agent comprising a co-polymer of an unsaturated poly-carboxylic acid.

Both agents may be fully, partially or non-neutralised.

Surprisingly it has been found that the composition displays high efficacy in providing a water softening function and a soap scum removal function.

The composition will be used for providing a water softening function in a clothes washing machine. Hence according to the invention there provided a method according to claim 1 by providing a water softening composition comprising a combination of polymeric water softening agents; the first agent comprising a polymer of an unsaturated carboxylic acid and the second agent comprising a co-polymer of an unsaturated poly-carboxylic acid and an unsaturated carboxylic acid.

Without wising to be bound by theory it is postulated that the reason for the high efficacy of the method of the invention is that the particle size of potentially problematic deposit forming agents (such as one or more metal cations associated with hard water (e.g. Ca²⁺, Mg²⁺) complexing with other agents (e.g. fatty acid anions from detergent agents) is greatly reduced. This means that they ate much more readily suspended in solution and hence removed from a washing machine, e.g. by suspension in rinse / drain water.

The first agent comprises a polyacrylate, i.e. a polymer of acrylic acid / acrylate.

The polyacrylate has a molecular weight of from 4000 to 8000. A preferred example is Acusol 445N (available from Dow) (CAS REG Nr. 66019-18-9).

In the second agent the unsaturated poly-carboxylic acid comprises a copolymer. The copolymer includes maleic acid and an olefin (e.g. such as ethylene, propylene, butene, butadiene)

The copolymer has a molecular weight of 5000 to 15000. A preferred example is Acusol 460NK (available from Dow).

A further preferred example is SOKALAN CP9 (available from BASF).

The weight ratio of the first agent to the second agent is preferably from 15:1 to 1:1, more preferably from 10:1 to 1:1, more preferably from 7:1 to 1:1, most preferably about 4:1.

The composition comprises from 8 to 12wt% of the first agent and about 0.5 to 2wt% of the second agent.

An acid may be present in an amount of up to 20%, more preferably up to 15%, more preferably up to 10%, more preferably up to 7%, and most preferably around 5%. The acid is preferably present in an amount of more than 1%, more preferably more than 2%, more preferably more than 3%, more preferably more than 4%, and most preferably around 5%.

Suitable acids are citric, phosphoric, sulphamic, acetic, formic, glycolic and oxalic acid. Preferably the acid is citric acid. (The water softening agent may also act as an acid - examples of such "acidic" water softening agents include polycarboxylate polymers (see below)).

An alkali may be present in an amount of up to 20%, more preferably up to 15%, and most preferably around 10%. The alkali may be present in an amount of more than 1%, more preferably more than 3%, more preferably more than 5%, more preferably more than 7%, and most preferably around 10%.

The alkali is preferably a sodium / potassium carbonate / salt of a carboxylic acid such as sodium bicarbonate. Sodium silicate may be used as an alkali, either in addition to or as an alternative to the carbonate / salt of a carboxylic acid. Where present the sodium silicate may be present in an amount of 1 -3%.

Generally the composition has a pH of (at 1% solution) of from 5.5 to 9.5, more preferably 7 (+ / - 0.5).

Preferably the composition is substantially free from any fabric softening actives, surfactant, and/or bleach. By substantially free we mean <15% wt, <12% wt, <10% wt, <8% wt, <6% wt, <4% wt, <2% wt, <1% wt, <0.5% wt, <0.1% wt, <0.01% wt of each and any combination or all of the ingredients listed above.

The composition may contain one or more detergent adjuncts such as dye transfer inhibitor, enzyme, optical brightener, soil suspending agent.

### Water Softening Agent

Ideally, an auxiliary water softening agent is also present. Preferred amounts present are from 5 to 80% wt.

There are two main types of method of action for water-softening agents, described below.
1) Ion capture agents - agents which prevent metal ions from forming insoluble salts or reacting with surfactants, such as polyphosphate, monomeric polycarboxylates, such as citric acid or salts thereof, polycarboxylate polymers, such as polyacrylates, acrylic/maleic copolymers, and acrylic phosphonates, EDTA, algins, alginates.
2) Anti-nucleating agents - agents that prevent seed crystal growth, such as polycarboxylate polymers, such as polyacrylates, acrylic/maleic copolymers, and acrylic phosphonates, and sulfonates. Such polymers may also act as ion capture agents as well.

Preferred organic water-soluble water softening agents which may be present include polycarboxylate polymers, such as polyacrylates, acrylic/maleic copolymers, and acrylic phosphonates, monomeric polycarboxylates such as citrates, gluconates, oxydisuccinates, glycerol mono- di- and trisuccinates, carboxymethyloxysuccinates, carboxymethyloxymalonates, dipicolinates, hydroxyethyliminodiacetates, phosphonates, iminodisuccinates, polyaspartic acids, BHT, phosphonatestabilisers such as, diethylenetriaminepenta (methylene phosphonic acid and its corresponding pentasodium salt) available under the trade names Dequest 2060 and Dequest 2066 Monsanto Chemical Co), DTPMP and DTPMA (Dequest 2010) and HEDP.

### Example 1

### Calcium Soap dispersing capacity test

Calcium soap dispersing capacity of the composition has been tested with a design of experiment with two factors (the two polymers) and one response (the volume of the calcium solution).

### Materials

150 mL beaker;
0.5% sodium oleate solution in deionised water;
1% polymer (as active matter) solution in deionised water;
100 ppm calcium solution in deionised water.

This method is an adaptation of the Hampshire test of the calcium carbonate dispersing capacity of polymers.

The solutions to be titrated are prepared by adding to a 150mL beaker 10mL of the soap solution and different volumes of the polymer solution. The total volume is then made up to 100mL with deionised water, and the obtained solution is titrated with the calcium solution. Following the same procedure, solutions containing different blends of the two polymers are prepared and titrated.

For the titrations, a Mettler Toledo automatic titrator equipped with a phototrode has been employed. The equivalence point of the titration (i.e. hard water solution volume) was taken as a measure of the calcium soap dispersing capacity of the polymer, or of the blends of polymers, bigger volumes indicating better dispersing capacity.

Using this test the following results were obtained for the agents.

| V 460NK sol (mL) | V 445N sol (mL) | V Ca²⁺ sol (mL) |
|---|---|---|
| 0.00 | 3.00 | 1.05 |
| 0.00 | 3.00 | 1.05 |
| 0.00 | 3.00 | 1.15 |
| 0.00 | 4.00 | 2.05 |
| 0.00 | 4.00 | 2.40 |
| 0.00 | 4.00 | 2.60 |
| 0.00 | 5.00 | 2.80 |
| 0.00 | 5.00 | 2.80 |
| 0.00 | 5.00 | 2.90 |
| 0.13 | 3.50 | 1.35 |
| 0.13 | 3.50 | 1.55 |
| 0.25 | 3.00 | 1.55 |
| 0.25 | 3.00 | 1.70 |
| 0.25 | 3.00 | 1.95 |
| 0.25 | 4.00 | 2.25 |
| 0.25 | 4.00 | 2.65 |
| 0.25 | 4.00 | 2.55 |
| 0.25 | 5.00 | 2.50 |
| 0.25 | 5.00 | 2.35 |
| 0.25 | 5.00 | 2.70 |
| 0.25 | 3.50 | 2.05 |
| 0.25 | 3.50 | 2.05 |
| 0.38 | 3.50 | 1.90 |
| 0.38 | 3.50 | 2.25 |
| 0.50 | 3.00 | 1.95 |
| 0.50 | 3.00 | 1.35 |
| 0.50 | 3.00 | 1.55 |
| 0.50 | 4.00 | 2.55 |
| 0.50 | 4.00 | 2.60 |
| 0.50 | 4.00 | 2.45 |
| 0.50 | 5.00 | 2.65 |
| 0.50 | 5.00 | 2.65 |
| 0.50 | 5.00 | 2.70 |

The analyses of the resulting surface shows a synergy in the activity of Acusol 445 and Acusol 460 in the addressing of calcium based soap scum / limescale.

### Example 2

### Calcium Soap dispersing capacity test via particle size

Calcium soap dispersing capacity of the composition was tested.

6.5mL of 0.5% w/w solution of sodium oleate was added into a beaker with 100mL of demineralized water. Then 1mL of 1% w/w solution of dispersant polymer (Acusol 445N / Acusol 460NK in a weight ratio of 4:1).

The water hardness was 20°fH and the final pH was adjusted to pH 10.50.

The initial solution (without polymer) and the final solution (with polymer)was analysed for particle size (using a Malvern Mastersize 2000).

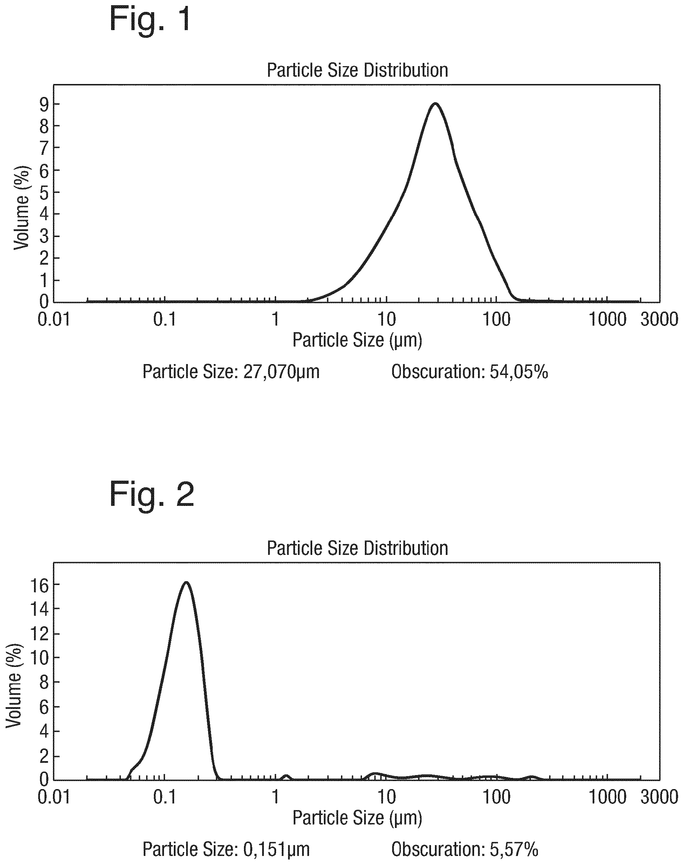

The results are shown in graphs 1 and 2.

Graph 1 shows that oleate in presence of Calcium (20°fH) has a large peak at 27 mm.

Graph 2 shows that oleate in presence of the polymers, at the same hardness has a different peak, centered at 0.15 mm.

The smaller particle size achieved using the formulation of the invention is significant. Such particles make up "scum forming" agents which are can be deposited in washing machines and, once deposited are hard to remove.

The fact that the particle size of these agents is considerable smaller in the presence of the formulation of the invention means that these problematic agents are much more easily suspended and removed from the washing machine before deposits can form. Thus the problem of deposit formation in washing machines is greatly alleviated.

### Example 3

### Soap scum deposition in beaker

Two different beakers with tap water (28°fH) were prepared: one with TEAsoap and 1mL of the composition from Example 2 (beaker A), the other one with TEAsoap.

After 1 week, there is a white solid at the bottom of beaker B. There isno solid in beaker A. After filtration, chemical analyses confirmed that the white solid is Calcium soap (Soap scum).

### Formulation Test

The formulations showed excellent water softening performance when used in a ware washing machine.

Tested against leading laundry powder detergent, composition reduced of 95% the limescale incrustation on the heating element of a washing machine after 25 washes with water at 43°fH.

## Claims

1. A method of removing and preventing the deposit of limescale and soap scum in a clothes washing machine by providing a composition substantially free from any fabric softening actives, surfactant and bleach comprising a combination of polymeric water softening agents; the first agent comprising a polyacrylate having a molecular weight of from 4,000 to 8,000; and the second agent comprising a co-polymer of an unsaturated poly-carboxylic acid comprising maleic acid, and the co-polymer further comprising an olefin, wherein the co-polymer has a molecular weight of from 5,000 to 15,000, wherein the composition comprises from 8 to 12wt% of the first agent and about 0.5 to 2wt% of the second agent.

## Patentansprüche

1. Verfahren zum Entfernen und Verhindern der Ablagerung von Kalk und Seifenrückständen in einer Wäschewaschmaschine durch Bereitstellen einer Zusammensetzung, die im Wesentlichen frei von jeglichen Wirkstoffen zum Weichspülen, Tensid und Bleichmittel ist, umfassend eine Kombination von polymeren Mitteln zur Wasserenthärtung; wobei das erste Mittel ein Polyacrylat umfasst, das ein Molekulargewicht von 4.000 bis 8.000 aufweist; und wobei das zweite Mittel ein Copolymer aus einer ungesättigten Polycarbonsäure umfasst, die Maleinsäure umfasst, und wobei das Copolymer ferner ein Olefin umfasst, wobei das Copolymer ein Molekulargewicht von 5.000 bis 15.000 aufweist, wobei die Zusammensetzung 8 bis 12 Gew.-% des ersten Mittels und etwa 0,5 bis 2 Gew.-% des zweiten Mittels umfasst.

## Revendications

1. Procédé d'élimination et de prévention du dépôt de calcaire et de résidus de savon dans un lave-linge, par fourniture d'une composition essentiellement exempte de tout actif adoucissant textile, agent tensioactif et agent de blanchiment, comprenant une combinaison d'agents polymères adoucissants ; le premier agent comprenant un polyacrylate présentant un poids moléculaire de 4 000 à 8 000 ; et le deuxième agent comprenant un copolymère d'un acide polycarboxylique insaturé comprenant de l'acide maléique, et le copolymère comprenant en outre une oléfine, le copolymère présentant un poids moléculaire de 5 000 à 15 000, la composition comprenant de 8 à 12 % en poids du premier agent et environ de 0,5 à 2 % en poids du deuxième agent.
